# EUROPÄISCHE PATENTSCHRIFT

(11) **EP 0 669 300 B1**
(45) Veröffentlichungstag und Bekanntmachung des Hinweises auf die Patenterteilung: **01.10.1997**
(21) Anmeldenummer: 94120518.9
(22) Anmeldetag: 23.12.1994
(51) Int. Cl.: C04B 41/88, C03C 17/06, B44C 1/17

(54) **Wässrige Edelmetallpräparate und deren Verwendung zur Herstellung von Edelmetalldekoren**
Aqueous noble metal preparations and their use in the making of noble metal decorations
Compositions aqueuses de métaux précieux et leur utilisation dans la fabrication de décorations en métaux précieux

(30) Priorität: 24.02.1994 DE 4405932
(43) Veröffentlichungstag der Anmeldung: 30.08.1995
(73) Patentinhaber: CERDEC AKTIENGESELLSCHAFT KERAMISCHE FARBEN, D-60327 Frankfurt (DE)
(72) Erfinder: Schulz, Andreas, Dr., D-63263 Neu-Isenburg (DE); Höfler, Marco, D-63571 Freigericht (DE)

(56) Entgegenhaltungen:
- EP-A- 0 514 073
- GB-A- 2 216 536

## Beschreibung

Die Erfindung richtet sich auf wäßrige Edelmetallpräparate auf der Basis von einem oder mehreren Edelmetallen aus der Reihe Au, Ag, Pt und Pd, wobei die Präparate mindestens ein wasserlösliches Edelmetallthiolat, ein organisches Bindemittel und Wasser enthalten und im wesentlichen frei sind von organischen Lösungsmitteln. Die Präparate dienen zur Herstellung von Edelmetalldekoren.

Zur Herstellung eines Edelmetalldekors, worunter auch Leiterbahnen integrierter Schaltkreise zählen, auf einem einbrennfähigen Substrat, wie insbesondere Glas, Porzellan und Keramik finden seit langem Edelmetallpräparate, darunter sogenannte Glanzgoldpräparate und Poliergoldpräparate, Anwendung. Solche Präparate enthalten im allgemeinen eine oder mehrere schwefelorganische Edelmetallverbindungen, ein oder mehrere organische polymere Bindemittel und ein Lösungsmittelsystem. Zusätzlich enthalten die Präparate zur Einstellung gewünschter optischer und vorteilhafter Gebrauchseigenschaften des herzustellenden Dekors andere lösliche und/oder unlösliche Edelmetallverbindungen und/oder Goldpulver und ein oder mehrere Flußmittel, etwa Oxide, Resinate, Salze oder Koordinationsverbindungen von B, Si, V, Cr, In, Zn, Sb, Bi und Rh, ferner zur Einstellung der Verarbeitungseigenschaften derartiger Präparate weitere Hilfsstoffe. Die Edelmetallpräparate werden mittels üblicher direkter und indirekter Druckverfahren, Sprühen oder Pinseln oder unter Verwendung der Abziehbildtechnik auf die zu beschichtende Oberfläche aufgetragen. Nach dem Abdunsten des Lösungsmittels schließt sich ein Brennvorgang bei einer auf das Substrat und das Goldpräparat abgestimmten Temperatur an - meistens liegt die maximale Brenntemperatur zwischen 400 und 900 °C, jedoch sind in Sonderfällen auch höhere Temperaturen möglich. Durch den Brennvorgang wird ein Edelmetallfilm ausgebildet und auf der Oberfläche des Substrats fixiert.

Bei den schwefelorganischen Goldverbindungen für die genannten Dekorationspräparate handelte es sich lange Zeit fast ausschließlich um sogenannte Goldsulforesinate, welche aus einem Gold(III)-salz und einem geschwefelten, insbesondere natürlich vorkommenden Terpen, gewonnen wurden. In diesen sowie in synthetischen Gold-thiolaten der allgemeinen Formel Au-S-R, worin R für eine Alkyl-, Cycloalkyl-, Aryl- oder Aralkylgruppe oder einen bicyclischen Kohlenwasserstoffrest steht, liegt das Gold in der einwertigen Form vor. Die vorgenannten Goldverbindungen erfordern bei der Verwendung in Goldpräparaten die Verwendung eines rein organischen Lösungsmittelsystems - beispielhaft wird auf die EP-B 0 491 143 verwiesen.

Aus arbeitshygienischen, Sicherheits- und Umweltgründen war die Fachwelt bemüht, Edelmetallpräparate, in deren Lösungsmittelsystem zumindest ein Teil des organischen Lösungsmittels durch Wasser ersetzt ist, aufzufinden. So lehrt die DE-OS 32 17 049 ein Anstrichmittel zum Auftragen einer Überglasurdekoration auf Porzellan, das 15 bis 40 Gew.-% Polyvinylpyrrolidon oder ein Gemisch aus Polyvinylpyrrolidon und wäßrigem Polyethylenoxid, 45 bis 85 Gew.-% Ethylenglykol und/oder Propylenglykol und eventuell Wasser enthält. Als färbende Stoffe werden in diesem Dokument Oxide, Gold und organische Goldverbindungen genannt. Ein beispielhaftes Vergoldungspräparat (Poliergold) enthält Goldpulver und ein Anstrichmedium, das außer den genannten Polymeren 72 Gew.-% Glykole, 6,3 Gew.-% Wasser und 1,5 Gew.-% eines nichtionischen Tensids enthält. Das Dokument vermittelt keine Lehre über die Struktur der Goldverbindungen und über die Zusammensetzung rein wäßriger Vergoldungspräparate.

Die DE 38 07 290 C2 lehrt ähnliche Poliergoldpräparate wie die zuvor (DE 32 17 049) beschriebenen: Außer Goldpulver und/oder schwerlöslichen Goldverbindungen, Polyvinylpyrrolidon, Wasser, wasserlöslichen Alkoholen und Tensiden enthalten diese Präparate eine wäßrige Acrylharz-Dispersion.

Aus der EP-A 0 514 073 sind homogene Zusammensetzungen, vorzugsweise Lösungen, bekannt, welche beim Einbrennen einen glänzenden metallischen Edelmetallfilm ausbilden. Die Zusammensetzungen enthalten 3 bis 22 Gew.-% eines Edelmetall-thiolats, ein polymeres Harz und als Lösungsmittelsystem ein Gemisch aus Wasser und einem organischen Lösungsmittel (Cosolvens), bei welchem es sich vorzugsweise um wassermischbare Alkohole, Ether oder Ester handelt. Sowohl das Edelmetall-thiolat als auch das Bindemittel sollen in dem Wasser/Cosolvens-Gemisch löslich sein. Die Zusammensetzungen enthalten 5 bis 85 Gew.-%, vorzugsweise 40 bis 55 Gew.-%, Wasser und 5 bis 45 Gew.-%, vorzugsweise 15 bis 30 Gew.-%, Cosolvens. Bei den bevorzugt eingesetzten Gold(I)-thiolaten handelt es sich um solche der allgemeinen Formel Au-S-R-H oder Au-S-R-X, wobei X für eine Nitrogruppe oder -COOH, -SO₂OH, -OH, -CONH₂, -NH₂ oder -O-P(O)(OH)₂, wobei die H-Atome gegebenenfalls substituiert sein können, oder Salze davon und R für einen divalenten organischen Rest steht. Aus dem genannten Dokument geht anhand zahlreicher Beispiele und Vergleichsbeispiele deutlich hervor, daß nur ganz spezielle Gold(I)-thiolate in entsprechenden Wasser und Cosolvens enthaltenden Goldpräparaten zu Dekoren mit gutem Glanz und guter Haftfestigkeit auf der dekorierten Unterlage führen. Das Dokument lehrt, daß es zur Verbesserung der Streichbarkeit zweckmäßig sein kann, ein Tensid mitzuverwenden; keines der beispielhaften Präparate enthält aber ein Tensid. Der EP-A 0 514 073 lassen sich keine Hinweise entnehmen, unter welchen Bedingungen auf die Mitverwendung eines organischen Cosolvens verzichtet werden kann.

Ein Polyvinylpyrrolidon und Wasser enthaltendes Poliergoldpräparat, das als Bindemittel zusätzlich eine wäßrige Acrylatharz-Dispersion und als färbende Komponente Goldpulver und/oder eine schwer lösliche Goldverbindung enthält, ist aus der GB-A 22 16 536 bekannt. Ausweislich der Beispiele sind auch in diesen Präparaten stets alkoholische Lösungsmittel anwesend. Zusätzlich enthalten die beispielhaften Präparate ein nichtionogenes Netzmittel in einer Menge von 5 bzw. 6 Gew.-%. Eine Anregung, eine wasserlösliche Goldverbindung einzusetzen und auf die Anwesenheit von Glykolen und Alkoholen zu verzichten, läßt sich diesem Dokument nicht entnehmen.

Die Aufgabe der vorliegenden Erfindung besteht darin, wäßrige Edelmetallpräparate, insbesondere Glanzgoldpräparate, aufzuzeigen, welche als Edelmetallverbindung ein Thiolat enthalten und im wesentlichen frei von organischen Lösungsmitteln sind. Unter Verwendung der wäßrigen Edelmetallpräparate sollten sich ästhetisch hochwertige, gut haftende Dekore auf einbrennfähigen Substraten herstellen lassen. Unter ästhetisch hochwertigen Dekoren werden insbesondere hochglänzende, poren- und fleckenfreie Dekore verstanden.

Gelöst wird die Aufgabe durch ein Edelmetallpräparat zur Herstellung von Edelmetalldekoren auf der Basis von einem oder mehreren Edelmetallen aus der Reihe Gold, Silber, Platin und Palladium, enthaltend ein Edelmetallthiolat, das mindestens eine zur Salzbildung befähigte funktionelle Gruppe aufweist, in Form eines wasserlöslichen Salzes, ein wasserlösliches polymeres organisches Bindemittel, ein wäßriges Lösungsmittelsystem und ein Tensid in wirksamer Menge, das dadurch gekennzeichnet ist, daß das Lösungsmittelsystem aus Wasser und weniger als 2 Gew.-%, bezogen auf das Präparat, organischen Lösungsmitteln besteht.

Bevorzugte Präparate enthalten ein Gold(I)- und/oder Silberthiolat in wasserlöslicher Form. Zusätzlich können zur Farbbeeinflussung auch Pt(II)- und/oder Pd(II)-thiolate zugegen sein.

Das Lösungsmittelsystem kann, wie überraschenderweise gefunden wurde, unter den erfindungsgemäßen Randbedingungen bezüglich Thiolaten und Polymeren sowie Tensiden im wesentlichen rein wäßrig sein. Unter "im wesentlichen" wird verstanden, daß der Anteil an organischen Lösungsmitteln weniger als 2 Gew.-%, vorzugsweise 0 oder weniger als 1 Gew.-%, bezogen auf das Präparat, beträgt. Der genannte Restgehalt an organischen Lösungsmitteln kann aus der Verwendung der eingesetzten Hilfsstoffe resultieren, wenn diese in Form organischer Lösungen im Handel sind und so eingesetzt werden.

Die in erfindungsgemäßen Präparaten einsetzbaren Edelmetallthiolate, weisen solche Strukturelemente auf, nämlich mindestens eine zur Salzbildung befähigte saure oder basische Gruppe, welche ihnen eine ausreichende Wasserlöslichkeit vermitteln. Die Präparate enthalten im allgemeinen 2 bis 25 Gew.-%, vorzugsweise 5 bis 15 Gew.-%, Edelmetall in Form eines oder mehrerer Thiolate. Demgemäß muß die Wasserlöslichkeit des Thiolats bei hohem Edelmetallgehalt des Präparats höher sein als bei geringerem Gehalt.

Bei der Herstellung der Präparate wird unmittelbar ein wasserlösliches Salz eines Thiolats eingesetzt oder das Salz wird in situ gebildet, aus einem mindestens eine saure funktionelle Gruppe aufweisenden Edelmetallthiolat und einer Base, etwa einer Alkalilauge, Ammoniak oder einem Amin oder aus einem eine Aminogruppe aufweisenden Edelmetallthiolat und einer Säure, wie niederen Carbonsäure. Besonders bevorzugt enthalten die Präparate ein Salz aus einem eine oder mehrere Carboxylgruppen aufweisenden Edelmetallthiolat und einem primären, sekundären oder tertiären Amin oder einer N-heterocyclischen Base. Vorzugsweise liegt der Zersetzungsbeginn der Thiolate bei einer Temperatur oberhalb 200 °C.

Vergoldungspräparate können Salze von Gold(I)-thiolaten enthalten, wie sie in der EP-A 0 514 073 offenbart wurden und sich als besonders wirksam erwiesen. Besonders bevorzugt enthalten die Präparate Salze von Gold(I)-thiolaten der allgemeinen Formel Au-S-Q-COOH, wobei Q für einen gegebenenfalls weitere funktionelle Gruppen aufweisenden bivalenten organischen Rest steht. Der organische Rest kann im wesentlichen aliphatisch, cycloaliphatisch, aromatisch oder heteroaromatisch sein. Zweckmäßigerweise weist der Rest Q eine begrenzte Anzahl C-Atome auf, bevorzugt zwischen 2 und 10 C-Atomen. Die in Präparaten der EP-A 0 514 073 als bevorzugt einsetzbaren Goldthiolate, wie insbesondere Goldthiolate von N-(Mercaptoalkanoyl)aminosäuren sowie von N-Acylcysteinen sind auch in den erfindungsgemäßen Präparaten in Form ihrer Salze gut einsetzbar. Im Einzelfall wird der Fachmann durch orientierende Versuche prüfen, ob ein ausgewähltes Edelmetallthiolat außer der Wasserlöslichkeit zusätzlich die gewünschten Dekoreigenschaften gewährleistet.

Erfindungsgemäße Präparate enthalten solche polymeren Bindemittel, welche in Wasser löslich sind, worunter auch eine klare Dispersion verstanden wird. Zweckmäßige Bindemittel sind Polyacrylsäure, Polymethacrylsäure, Polyvinylpyrrolidon, Celluloseether, insbesondere Carboxyalkyl- und Hydroxyalkyl-Cellulose, Polyalkylenglykol, Polyvinylacetat, Polyvinylalkohol, Polyamine und wasserverdünnbare Alkydharze und Polyurethanharze. Die Bindemittel können in Form von Homopolymeren oder Copolymeren oder Blockpolymeren jeweils einzeln oder in Form von Gemischen zur Anwendung gelangen. Besonders bevorzugt werden Polyvinylpyrrolidon-homo- oder - copolymere sowie Hydroxyethylcellulose und Gemische davon.

Der Anteil an polymeren Bindemitteln in den Präparaten liegt üblicherweise im Bereich zwischen 3 und 45 Gew.-%, vorzugsweise zwischen 3 und 20 Gew.-% und insbesondere 4 bis 10 Gew.-%. Das Gewichtsverhältnis von Bindemittel zu Edelmetall in den Präparaten liegt zweckmäßigerweise im Bereich zwischen 0,1 bis 2, vorzugsweise zwischen 0,3 bis 1,2 und insbesondere zwischen 0,5 und 1,0.

Erfindungswesentlicher Bestandteil der wäßrigen Präparate ist ein mit dem Salz des Thiolats verträgliches Tensid aus der Reihe anionischer, nichtionischer, zwitterionischer und kationischer Tenside in wirksamer Menge. Die Verträglichkeit und Wirksamkeit eines ausgewählten Tensids wird der Fachmann durch orientierende Versuche überprüfen, weil Wechselwirkungen auch mit den anderen Bestandteilen des Präparate auftreten können. Üblicherweise wird mit einer Tensidmenge zwischen 0,1 und 2 Gew.-%, bezogen auf das Präparat, eine gute Wirkung erzielt; eine größere oder kleinere Menge ist im Einzelfall aber möglich. Vorzugsweise liegt der Tensidgehalt zwischen 0,2 und 1 Gew.-%.

Die Tenside enthalten im Molekül einen hydrophoben Rest von 8 bis 26 und insbesondere 10 bis 18 C-Atomen oder eine andere hydrophobe Gruppierung, wie beispielsweise eine solche auf der Basis Polydimethylsiloxan, und wenigstens eine anionische, zwitterionische, nichtionische oder kationische wasserlöslichmachende Gruppe.

Unter den anionischen Tensiden sind als geeignete Beispiele zu nennen: Geradkettige oder verzweigtkettige Alkylbenzolsulfonate, insbesondere solche mit einer geradkettigen C₈- bis C₁₆-Alkylgruppe, aliphatische und olefinische (C₈-C₁₈-)-Sulfonate, Hydroxyalkansulfonate, Fettsäureester der Oxyethansulfonsäure; Fettalkoholsulfate, sulfatierte Fettsäurealkylolamide und Fettsäuremonoglyceride sowie sulfatierte Alkoxylierungsprodukte von Fettalkoholen, Alkylphenolen, Fettsäureamiden; gesättigte und ungesättigte Fettsäuresalze, Alkyl- und Alkenyl-ethercarbonsäuresalze enthaltend eine (C₁₀-C₂₀-)-Alkyl- oder Alkenylgruppe und eine 1 bis 8 Einheiten umfassende Polyethylenglykolgruppe; α-Sulfofettsäuren; amidartige Kondensationsprodukte von Fettsäuren oder Sulfonsäuren mit Aminocarbonsäuren, wie Glycin, Sarkosin, Eiweishydrolysaten. Besonders geeignete anionische Tenside sind Alkylbenzolsulfonate mit 8 bis 14 C-Atomen, insbesondere in Form eines Salzes mit einem Amin in einer Menge von 0,1 bis 2 Gew.-%, vorzugsweise 0,2 bis 1 Gew.-%, bezogen auf das Präparat.

Nichtionische Tenside verdanken ihre Wasserlöslichkeit der Anwesenheit von Polyethergruppen, ferner Aminoxid-, Sulfoxid-, Phosphinoxid und Alkylolamidgruppierungen. Von besonderem Interesse sind Alkoxylierungsprodukte, besonders Ethoxylierungsprodukte von Fettalkoholen, Akylphenolen, Fettaminen, Alkanolaminen, Fettsäuren, Fettsäure- und Sulfonsäureamiden.

Eine weitere in den erfindungsgemäßen Präparaten besonders wirksame Gruppe von nichtionischen Tensiden sind wasserlösliche polyethermodifizierte Polysiloxane - es handelt sich hierbei um Polyether-Polysiloxan-Copolymere, wobei lineare oder verzweigte Block-Copolymerstrukturen vorliegen können. Die Einsatzmenge liegt bei dieser Klasse vorzugsweise zwischen 0,1 und 2,0 Gew.-%, insbesondere zwischen 0,2 und 1,0 Gew.-%, bezogen auf das Präparat. Bei den Polyethersegmenten handelt es sich um Polyoxyethylen-, Polyoxypropylen- oder Poly(oxyethylen-oxypropylen)-Segmente, wobei Polyoxyethylensegmente und hierbei insbesondere solche mit 4 bis 20 Oxyethyleneinheiten bevorzugt werden. Die Polysiloxansegmente basieren vorzugsweise auf Dimethylsiloxan. Die Polyether- und Polysiloxansegmente können über Si-O-C- oder Si-C-Bindungen aneinander gebunden sein. Beispielhaft wird auf Ullmann's Encylopedia of Industrial Chemistry 5. ed., Vol. A 24, S. 83-84 (1993) und Ind. Eng. Chem. Proc. Res., Dev. 6 (1967), S. 88-92 verwiesen.

Zwitterionische Tenside enthalten sowohl eine saure, wie Carboxyl-, Sulfonsäure-, Schwefelsäurehalbester- oder Phosphorsäureteilestergruppe, als auch eine basische, wie, primäre, sekundäre, tertiäre, quaternäre Ammoniumgruppierung, hydrophile Gruppe. Betaine gehören hierzu, wie beispielsweise solche vom Typ 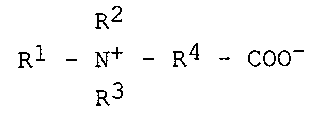 mit R¹ gleich Alkyl, Alkenyl, Hydroxyalkyl mit 8 bis 24 C-Atomen, R² und R³ gleich oder verschieden Alkyl oder Hydroxyalkyl mit 1 bis 4 C-Atomen, R⁴ gleich Alkylen oder Hydroxyalkylen mit 1 bis 6 C-Atomen.

Bei den kationischen Tensiden handelt es sich meist um Stoffe der Formel 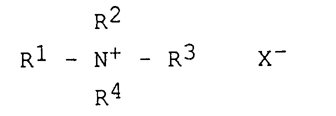 mit R¹ gleich Alkyl oder Alkenyl mit 8 bis 24 C-Atomen, R² bis R⁴ gleich Alkyl oder Hydroxyalkyl mit 1 bis 5 C-Atomen und X⁻ gleich ein Halogenatom.

Im Falle von Vergoldungspräparaten, insbesondere Glanzgoldpräparaten und Poliergoldpräparaten, enthalten diese zur Farbbeeinflussung eine geringe Menge einer oder mehrerer im System im wesentlichen löslicher anderer Edelmetallverbindungen in Form von Resinaten oder Sulforesinaten oder in Form einfacher Edelmetallsalze oder -komplexe. Zusätzlich enthalten die Präparate üblicherweise Flußmittel in Form von Verbindungen, beispielsweise Resinaten, Salzen, Oxiden oder Koordinationsverbindungen, eines oder mehrerer der Elemente Bor, Silicium, Vanadium, Chrom, Indium, Zinn, Antimon, Wismut und Rhodium.

Weitere Hilfsstoffe in den erfindungsgemäßen Präparaten können übliche Stoffe zur Veränderung der rheologischen Eigenschaften des Präparats, die Haftung verstärkende Hilfsstoffe sowie Trocknungsbeschleuniger im Falle der Verwendung eines UV-härtbaren Harzes sein. Die zusätzliche Verwendung einer wäßrigen Polysulfidlösung hat sich in manchen Fällen, insbesondere in Polyvinylpyrrolidon enthaltenden Präparaten, als zweckmäßig erwiesen.

Im Falle von sogenannten Glanzgoldpräparaten enthalten diese vorzugsweise ein Gold(I)-thiolat in Form eines Salzes in einer Menge von 2 bis 25 Gew.-%, vorzugsweise 5 bis 15 Gew.-%, jeweils berechnet als Gold. Der Bindemittelanteil in den Präparaten liegt im allgemeinen zwischen 3 und 45 Gew.-%, vorzugsweise zwischen 3 und 10 Gew.-%, wobei das Gewichtsverhältnis von Harz zu Edelmetall vorzugsweise zwischen 0,3 und 1,2 liegt. Der Wassergehalt liegt im allgemeinen zwischen 10 und 90 Gew.-%, vorzugsweise zwischen 40 bis 80 Gew.-%, jeweils bezogen auf das Präparat. Die Einsatzmenge der Flußmittel bewegt sich üblicherweise im Bereich zwischen 0,01 und 2 Gew.-%, bezogen auf das Präparat. Im Falle von sogenannten Poliergoldpräparaten enthalten diese zusätzlich Goldpulver und/oder feinteilige unlösliche Goldverbindungen. Je nach gewünschtem Effekt können Poliergoldpräparate zusätzlich noch Glasfritten und/oder Organosiliciumverbindungen enthalten.

Die Herstellung der wäßrigen Präparate erfolgt in einfacher Weise: Die Edelmetallthiolate werden in Wasser bei Raumtemperatur oder erhöhter Temperatur, vorzugsweise bei 30 bis 80 °C, unter Zusatz einer Base, vorzugsweise eines Amins gelöst. Pro Mol Thiolat wird im allgemeinen die zur Neutralisation der sauren Gruppen erforderliche Menge Base eingesetzt; in einigen Fällen wird bereits bei einem Baseunterschuß eine vollständige Lösung erzielt. Ein Baseüberschuß ist möglich, im allgemeinen aber nicht erforderlich. Zur erhaltenen Lösung werden die Flußmittel gegeben und gelöst. Das Bindemittel wird anschließend unmittelbar in die Lösung eingetragen und darin aufgelöst. Alternativ hierzu kann das Bindemittel oder Bindemittelgemisch, ggf. unter Zusatz weiterer Hilfsstoffe, wie etwa einer Polysulfidlösung, in Wasser aufgelöst und diese Lösung mit der edelmetallhaltigen Lösung vereinigt werden. Das Tensid wird während der Präparatherstellung einer der Lösungen oder am Ende der Herstellung dem Präparat selbst zugesetzt.

Die erfindungsgemäßen Präparate können unmittelbar mittels üblicher Dekorationsverfahren, wie Sprühen, Pinseln oder bekannter Druckverfahren, insbesondere Siebdruckverfahren, auf die zu dekorierende Oberfläche aufgebracht und nach dem Abdunsten des Wassers unter Ausbildung des Dekors bei einer Temperatur zwischen im allgemeinen 400 und 900 °C eingebrannt werden.

Alternativ läßt sich das erfindungsgemäße Edelmetallpräparat unter Mitverwendung eines Abziehbilds auf den zu dekorierenden Gegenstand übertragen. Die Herstellung des Abziehbilds erfolgt in für den Fachmann bekannter Weise, wobei sich die Edelmetallthiolatverbindung in der Dekorschicht des Abziehbilds befindet: Auf eine auf einen Träger aufgebrachte wasserlösliche Trennschicht oder eine Thermotrennschicht wird unter Verwendung eines zuvor beschriebenen edelmetallhaltigen Präparats und Verdunstenlassen des Wassers und gegebenenfalls Vernetzen des Bindemittels eine Dekorschicht aufgebracht; die Dekorschicht wird üblicherweise überfilmt.

Durch die Erfindung wurden im wesentlichen rein wäßrige Präparate zur Verfügung gestellt, welche sich hervorragend zur Herstellung von filmartigen edelmetallhaltigen Dekoren eignen. Die Dekore sind überraschend hochglänzend und haften ausgezeichnet auf der Substratfläche, da ein zusammenhängender Film gebildet wird. Zudem gelingt es, flecken- und porenfreie Filme zu erzeugen, welche den ästhetischen Erfordernissen entsprechen.

Im Hinblick auf den Stand der Technik war nicht vorhersehbar, daß es möglich ist, Edelmetallpräparate zur Herstellung von Edelmetalldekoren, insbesondere Glanzgolddekoren, zur Verfügung zu stellen, in welchen auf den Einsatz von organischen Lösungsmitteln verzichtet werden kann. Bisher war offensichtlich die Meinung vertreten worden, daß die Anwesenheit einer größeren Menge organischer Lösungsmittel in wasserhaltigen Präparaten zwingend erforderlich sei. Durch die erfindungsgemäße Kombination von speziellen Thiolaten, wasserlöslichen Polymeren und einem Tensid ist es, wie die nachfolgenden Beispiele zeigen, möglich, rein wäßrige Präparate zu erhalten und mit ihrer Hilfe hochwertige Dekore auf einbrennfähigen Substraten herzustellen.

### Beispiele 1 bis 5

### Herstellung der Präparate:

Zur Herstellung der Präparate wurden das Gold- und Silberthiolat in Wasser bei 50 °C unter Zugabe des Amins gelöst; schließlich wurden die Hilfsstoffe eingetragen; anschließend wurde das Polyvinylpyrrolidon in Form einer wäßrigen Lösung eingetropft und durch Rühren eine homogene Lösung erzeugt; sofern nötig, wird der gewünschte Wassergehalt durch Verdünnen mit Wasser eingestellt.

**Tabelle 1**

| Zusammensetzung von Glanzgoldpräparaten (Angabe in Gewichtsteilen): | | | | | |
|---|---|---|---|---|---|
| Beispiel Nr. | 1 | 2 | 3 | 4 | 5 |
| Gold(I)-N-acetylcystein | 17,9 | 17,9 | 17,9 | - | - |
| Gold (I)-N-(2-mercaptopropionyl)glycin | - | - | - | 17,9 | 17,9 |
| Silber-N-(2-mercaptopropionyl)glycin | 2,6 | 2,6 | 2,6 | 2,6 | 2,6 |
| Polyvinylpyrrolidon | 5,3 | 5,3 | 5,3 | 5,3 | 5,3 |
| Polyether-Polysiloxan-Copolymeres als 46 %ige Lösung in Dipropylenglykolmonomethylether (ByK®346, ByK-Chemie GmbH) | - | 1,0 | - | 1,0 | - |
| Isopropylamindodecylbenzolsulfonat | - | - | 1,0 | - | 1,0 |
| Wasser | 67,1 | 67,1 | 67,1 | 67,1 | 67,1 |
| Rhodiumchlorid | 0,15 | 0,15 | 0,15 | 0,15 | 0,15 |
| Chromsulfat | 0,04 | 0,04 | 0,04 | 0,04 | 0,04 |
| Ammoniumwismutcitrat | 0,61 | 0,61 | 0,61 | 0,61 | 0,61 |
| Triethylamin | 5,3 | 5,3 | 5,3 | 5,3 | 5,3 |

### Dekorationsverfahren:

Die Präparate wurden mit dem Pinsel auf Porzellan aufgetragen. (a) Brennbedingungen: innerhalb 30 Minuten wurde auf 880 °C aufgeheizt und 2 Minuten bei der angegebenen Temperatur gehalten; (b) Aufheizung auf 820 °C in 1 h und Haltezeit 10 Minuten.

Mit dem nicht-erfindungsgemäßen Präparat gemäß Beispiel 1 wurde nur ein fleckiges, teilweise poriges Dekör erhalten. Mit den erfindungsgemäßen Präparaten gemäß den Beispielen 2 bis 5 wurden sowohl bei den Brennbedingungen (a) als auch (b) hochglänzende, fleckenfreie und gut haftende Dekore erhalten.

### Beispiele 6 und 7

Wäßriges Glanzgoldpräparat auf der Basis von Gold(I)-N-acetylcystein und Silber-N-(2-mercaptopropionyl)glycin als Edelmetallthiolate und Hydroxyethylcellulose (=Natrasol von Aqualon Ltd., UK) als Bindemittel mit (=Beispiel 6 - erfindungsgemäß) und ohne (=Beispiel 7 - nicht erfindungsgemäß) polyethermodifiziertem Polydimethylsiloxan (=ByK®346) als Tensid. Rh-, Cr- und Bi-Hilfsstoffe wie in den Beispielen 1 bis 5. Herstellung des Präparats analog der allgemeinen Vorschrift.

**Tabelle 2**

| Glanzgoldpräparate | | |
|---|---|---|
| Beispiel Nr. | 6 | 7 |
| | (Gehaltsangaben in Gew.-%, bezogen auf das Präparat) | |
| Au-Gehalt | 9,71 | 9,62 |
| Ag-Gehalt | 1,1 | 1,08 |
| Rh-Gehalt | 0,07 | 0,07 |
| Cr₂O₃-Gehalt | 0,01 | 0,01 |
| Bi₂O₃-Gehalt | 0,30 | 0,30 |
| Bindemittel | 5,3 | 5,3 |
| Tensid ByK®346 (46 %ig in Dipropylenglykolmonomethylether) | 1 | - |
| Triethylamin (zur Salzbildung der Thiolate) | 5,3 | 5,3 |

Das Präparat gemäß Beispiel 6 ergibt beim Dekorieren mittels Siebdruck auf Porzellan unter den Brennbedingungen (a) und (b) hochglänzende, fleckenfreie Dekore. Das nichterfindungsgemäße Präparat gemäß Beispiel 7 liefert nur fleckige Dekore.

### Beispiele 8 und 9

Wäßrige Glanzgoldpräparate auf der Basis des in den Beispielen 6 und 7 genannten Au-Thiolats und Tensids (ByK®346) sowie der Hilfsstoffe gemäß Beispielen 1 bis 5. Als Bindemittel kamen Gemische aus Polyvinylpyrrolidon (PVP K25, Fluka) und Hydroxyethylcellulose (Natrasol®, Aqualon Ltd.) im Verhältnis 1 zu 2 zum Einsatz; zusätzlich wurde eine wäßrige Ammoniumpolysulfidlösung (15 gew.-%ig) eingesetzt.

**Tabelle 3**

| Glanzgoldpräparate | | |
|---|---|---|
| Beispiel Nr. | 8 | 9 |
| | (Gehaltsangaben in Gew.-%, bezogen auf das Präparat) | |
| Au-Gehalt | 9,48 | 9,48 |
| Rh-Gehalt | 0,06 | 0,06 |
| Cr₂O₃-Gehalt | 0,02 | 0,02 |
| Bi₂O₃-Gehalt | 0,22 | 0,22 |
| PVP K25 | 3,5 | 1,75 |
| Natrasol® | 1,75 | 3,5 |
| ByK®346 (tel quel) | 1,0 | 1,0 |
| Triethylamin (zur Salzbildung) | 4,9 | 4,9 |
| (NH₄)₂ Sx | 0,18 | 0,18 |

Das Präparat gemäß Beispiel 8, aufgetragen als Pinselpräparat brannte seidenglänzend aus. Das Präparat gemäß Beispiel 9 brannte nach Siebdruckauftrag bei 820 °C hochglänzend aus.

### Beispiele 10 und 11

Die Beispiele 6 und 7 wurden wiederholt, wobei jedoch anstelle Au(I)-N-acetylcystein Au(I)-N-(2-mercaptopropionyl)glycin eingesetzt wurde.

**Tabelle 4**

| Glanzgoldpräparate | | |
|---|---|---|
| Beispiel Nr. | 10 | 11 |
| | (Gehaltsangaben in Gew.-%, bezogen auf das Präparat) | |
| Au-Gehalt | 9,62 | 9,7 |
| Ag-Gehalt | 1,09 | 1,1 |
| Rh-Gehalt | 0,07 | 0,07 |
| Cr₂O₃-Gehalt | 0,01 | 0,01 |
| Bi₂O₃-Gehalt | 0,30 | 0,30 |
| Bindemittel (Natrasol®) | 5,3 | 5,3 |
| ByK®346 (tel quel) | 1 | - |
| Triethylamin | 5,3 | 5,3 |

Das Präparat gemäß Beispiel 11 (nicht-erfindungsgemäß) führte nach Siebdruckapplikation nur zu fleckigen Dekoren, sowohl unter den Brennbedingungen (a) als auch (b).

Das Präparat gemäß Beispiel 10 führte nach Siebdruckapplikation auf Porzellan zu hochglänzenden, flecken- und porenfreien Golddekoren.

## Patentansprüche

1. Edelmetallpräparat zur Herstellung von Edelmetalldekoren auf der Basis von einem oder mehreren Edelmetallen aus der Reihe Gold, Silber, Platin und Palladium, enthaltend ein Edelmetallthiolat, das mindestens eine zur Salzbildung befähigte funktionelle Gruppe aufweist, in Form eines wasserlöslichen Salzes, ein wasserlösliches polymeres organisches Bindemittel, ein wäßriges Lösungsmittelsystem und ein Tensid in wirksamer Menge,
dadurch gekennzeichnet,
daß das Lösungsmittelsystem aus Wasser und weniger als 2 Gew.-%, bezogen auf das Präparat, organischen Lösungsmitteln besteht.

2. Edelmetallpräparat nach Anspruch 1,
dadurch gekennzeichnet,
daß es ein Salz aus einem eine oder mehrere Carboxylgruppen aufweisenden Edelmetallthiolat und einem primären, sekundären oder tertiären Amin oder einer N-heterocyclischen Base enthält.

3. Edelmetallpräparat nach Anspruch 1 oder 2,
dadurch gekennzeichnet,
daß es ein wasserlösliches Salz eines Gold(I)-thiolats der allgemeinen Formel Au-S-Q-COOH, wobei Q für einen gegebenenfalls weitere funktionelle Gruppen aufweisenden bivalenten organischen Rest steht, enthält, das sich vorzugsweise bei einer Temperatur oberhalb 200 °C zu zersetzen beginnt.

4. Edelmetallpräparat nach Anspruch 3,
dadurch gekennzeichnet,
daß es ein wasserlösliches Salz eines Gold(I)-thiolats aus der Reihe Gold(I)-N-(Mercapto(C₂- oder C₃-)alkanoyl)aminosäuren oder Gold(I)-N-acylcysteinen enthält.

5. Edelmetallpräparat nach einem der Ansprüche 1 bis 4,
dadurch gekennzeichnet,
daß das polymere organische Bindemittel ausgewählt ist aus der Reihe der Polyvinylpyrrolidon-homo- oder copolymeren, Polyacrylsäurehomo- oder -copolymeren, Polymethacrylsäure-homo- oder -copolymeren und wasserlöslichen Celluloseethern sowie Gemischen der genannten Bindemittel.

6. Edelmetallpräparat nach einem der Ansprüche 1 bis 5,
dadurch gekennzeichnet,
daß es als Tensid 0,1 bis 2,0 Gew.-%, vorzugsweise 0,2 bis 1,0 Gew.-%, eines Polyoxyethylenpolydimethylsiloxans enthält.

7. Edelmetallpräparat nach einem der Ansprüche 1 bis 5,
dadurch gekennzeichnet,
daß es als Tensid ein Alkylbenzolsulfonat mit 8 bis 14 C-Atomen in der Alkylgruppe in Form eines Salzes mit einem Amin in einer Menge von 0,1 bis 2 Gew.-%, vorzugsweise 0,2 bis 1 Gew.-%, enthält.

8. Edelmetallpräparat nach einem der Ansprüche 1 bis 7,
dadurch gekennzeichnet,
daß das Thiolat in Form eines Salzes mit Tri(C₁- bis C₃)alkylamin oder Mono-, Di- oder Triäthanolamin vorliegt und das Präparat zusätzlich übliche Hilfsstoffe zur Einstellung der optischen und Gebrauchseigenschaften des herzustellenden Dekors und/oder der Verarbeitungseigenschaften des Präparats enthält.

9. Abziehbild, erhalten durch Aufbringen einer Dekorschicht auf einen mit einer Trennschicht versehenen Träger, Verdunstenlassen von Lösungsmitteln und bei Bedarf Überfilmen der getrockneten Dekorschicht,
dadurch gekennzeichnet,
daß die Dekorschicht unter Verwendung eines Edelmetallpräparates gemäß einem der Ansprüche 1 bis 8 hergestellt wurde.

10. Verfahren zum Dekorieren einbrennfähiger Substrate, insbesondere Glas, Porzellan oder Keramik durch Aufbringen eines ein Edelmetallthiolat enthaltenden Präparats oder eines dieses Präparat in getrocknetem Zustand enthaltenden Abziehbilds auf das Substrat und Einbrennen bei 400 bis 900 °C,
dadurch gekennzeichnet,
daß man ein Präparat gemäß einem der Ansprüche 1 bis 8 oder ein dieses Präparat enthaltendes Abziehbild gemäß Anspruch 9 verwendet.

## Claims

1. Precious metal preparation for manufacturing precious metal decorations on the basis of one or more precious metals from the series gold, silver, platinum and palladium, containing a precious metal thiolate which has at least one functional group capable of salt formation, in the form of a water-soluble salt, a water-soluble polymer organic binder, an aqueous solvent system and a surfactant in effective quantity, characterized in that the solvent system comprises water and less than 2 wt.%, related to the preparation, of organic solvents.

2. Precious metal preparation according to Claim 1, characterized in that it contains a salt of a precious metal thiolate having one or more carboxyl groups and a primary, secondary or tertiary amine or an N-heterocyclic base.

3. Precious metal preparation according to Claim 1 or 2, characterized in that it contains a water-soluble salt of a gold(I) thiolate of the general formula Au-S-Q-COOH, wherein Q stands for a divalent organic group optionally containing further functional groups, which preferably begins to decompose at a temperature above 200 °C.

4. Precious metal preparation according to Claim 3, characterized in that it contains a water-soluble salt of a gold(I) thiolate from the series gold(I)-N-mercapto(C₂- or C₃-)alkanoyl)amino acids or gold(I)-N-acylcysteines.

5. Precious metal preparation according to one of Claims 1 to 4, characterized in that the polymer organic binder is selected from the series of polyvinyl pyrrolidone homo- or copolymers, polyacrylic acid homo- or copolymers, polymethacrylic acid homo- or copolymers and water-soluble cellulose ethers as well as mixtures of the said binders.

6. Precious metal preparation according to one of Claims 1 to 5, characterized in that as surfactant it contains 0.1 to 2 wt.%, preferably 0.2 to 1.0 wt.%, of a polyoxyethylene polydimethyl siloxane.

7. Precious metal preparation according to one of Claims 1 to 5, characterized in that as surfactant it contains an alkylbenzene sulphonate with 8 to 14 C atoms in the alkyl group in the form of a salt with an amine in a quantity of 0.1 to 2 wt.%, preferably 0.2 to 1 wt.%.

8. Precious metal preparation according to one of Claims 1 to 7, characterized in that the thiolate is present in the form of a salt with tri(C₁ to C₃)alkylamine or mono-, di- or triethanolamine and the preparation also contains conventional auxiliary substances for setting the optical and usage properties of the decoration to be manufactured and/or the processing properties of the preparation.

9. Decalcomania transfer, obtained by applying a decoration layer to a carrier provided with a separation layer, allowing solvents to evaporate and film-coating the dried decoration if required, characterized in that the decoration layer was produced using a precious metal preparation according to one of Claims 1 to 8.

10. Process for decorating stovable substrates, particularly glass, porcelain or ceramic by applying a preparation containing a precious metal thiolate or a decalcomania transfer containing this preparation in the dry state to the substrate and stoving at 400 to 900 °C, characterized in that a preparation according to one of Claims 1 to 8 or a decalcomania transfer containing this preparation according to Claim 9 is used.

## Revendications

1. Préparation de métaux précieux pour préparer des décors de métal précieux à base d'un ou plusieurs métaux précieux de la série de l'or, de l'argent, du platine et du palladium, contenant un thiolate de métal précieux qui présente au moins un groupe fonctionnel pouvant former un sel, sous forme d'un sel hydrosoluble, d'un liant organique polymère hydrosoluble, d'un système solvant aqueux et d'un tensioactif en quantité efficace,
caractérisée en ce que
le système solvant est constitué d'eau et de moins de 2 % en poids de solvants organiques par rapport à la préparation.

2. Préparation de métaux précieux selon la revendication 1,
caractérisée en ce qu'
elle contient un sel d'un thiolate de métal précieux présentant un ou plusieurs groupes carboxyles et d'une amine primaire, secondaire ou tertiaire ou d'une base N-hétérocyclique.

3. Préparation de métaux précieux selon la revendication 1 ou 2,
caractérisée en ce qu'
elle contient un sel hydrosoluble d'un thiolate d'or (I) de formule générale Au-S-Q-COOH, où Q représente un radical organique bivalent présentant d'autres groupes fonctionnels qui commence à une température supérieure à 200°C.

4. Préparation de métaux précieux selon la revendication 3,
caractérisée en ce qu'
elle contient un sel hydrosoluble d'un thiolate d'or (I) de la série des or (I)-N-(mercapto(alcanoyl C₂ ou C₃) aminoacides ou des or (I)-N-acylcystéines.

5. Préparation de métaux précieux selon l'une des revendications 1 à 4
caractérisée en ce qu'
on choisit le liant organique polymère dans la série des homopolymère dans la série des homo ou copolymères de polyvinylpyrrolidone, des homo- ou copolymères de poly(acide acrylique), des homo- ou copolymères de poly(acide méthacrylique) et des éthers de cellulose hydrosolubles ainsi que les mélanges des liants cités.

6. Préparation de métaux précieux selon l'une des revendications 1 à 5
caractérisée en ce qu'
elle contient comme tensioactif 0,1 à 2,0 % en poids, de préférence 0,2 à 1,0 % en poids d'un polyoxyéthylènepolydiméthylsiloxane.

7. Préparation de métaux précieux selon l'une des revendications 1 à 5
caractérisée en ce qu'
elle contient comme tensioactif un alkylbenzynesulfonate de 8 à 14 atomes de C dans le groupe alkyle sous forme d'un sel d'une amine en une quantité de 0,1 à 2 % en poids, de préférence 0,2 à 1 % en poids.

8. Préparation de métaux précieux selon l'une des revendications 1 à 7
caractérisée en ce que
le thiolate est sous forme d'un sel de tri(alkyl C₁ à C₃)amine ou de mono-, di- ou triéthanolamine et la préparation contient en plus les additifs usuels pour ajuster les propriétés optiques et d'usage du décor à réaliser et/ou les propriétés de transformation de la préparation.

9. Décalcomanie obtenue par dépôt d'une couche décorée sur un support muni d'une couche de séparation, par évaporation des solvants et par pelliculage si nécessaire de la couche décorée séchée,
caractérisée en ce qu'
on a préparé la couche décorée en utilisant une préparation de métal précieux selon l'une des revendications 1 à 8.

10. Procédé de décor de substrats pouvant être cuits, notamment le verre, la porcelaine ou la céramique par dépôt d'une préparation contenant un thiolate de métal précieux ou d'une décalcomanie contenant à l'état sec cette préparation, sur le substrat et cuisson entre 400 et 900°C,
caractérisé en ce qu'
on utilise une préparation selon l'une des revendications 1 à 8 ou une décalcomanie contenant cette préparation selon la revendication 9.
